# EUROPÄISCHE PATENTSCHRIFT

(11) **EP 1 444 493 B1**
(45) Veröffentlichungstag und Bekanntmachung des Hinweises auf die Patenterteilung: **14.04.2010**
(21) Anmeldenummer: 02787548.3
(22) Anmeldetag: 04.11.2002
(51) Int. Cl.: G01L 9/04

(54) **DRUCKAUFNEHMER ZUR ZYLINDERDRUCKMESSUNG BEI MOTOREN, UND VERFAHREN ZUR HERSTELLUNG DESSELBEN**
PRESSURE SENSOR FOR MEASURING THE CYLINDER PRESSURE IN ENGINES AND A METHOD FOR PRODUCING THE SAME
CAPTEUR DE PRESSION DESTINE A MESURER LA PRESSION DANS LES CYLINDRES DE MOTEURS, ET PROCEDE DE FABRICATION DUDIT CAPTEUR

(30) Priorität: 03.11.2001 DE 10153424
(43) Veröffentlichungstag der Anmeldung: 11.08.2004
(73) Patentinhaber: KMW Dünnschichttechnik und Mikrosysteme GmbH, 87600 Kaufbeuren (DE)
(72) Erfinder: WUNDERLICH, Rainer, 87679 Westendorf (DE)
(74) Vertreter: Pfister, Stefan Helmut Ulrich
(86) Internationale Anmeldenummer: PCT/EP2002/012258
(87) Internationale Veröffentlichungsnummer: WO 2003/040676

(56) Entgegenhaltungen:
- EP-A- 0 596 711
- GB-A- 2 129 565
- US-A- 4 373 399
- US-A- 4 972 579
- US-A- 5 525 280
- US-B1- 6 422 088
- PATENT ABSTRACTS OF JAPAN vol. 017, no. 276 (E-1372), 27. Mai 1993 (1993-05-27) & JP 05 013782 A (NAGANO KEIKI SEISAKUSHO LTD), 22. Januar 1993 (1993-01-22)
- PATENT ABSTRACTS OF JAPAN vol. 012, no. 418 (E-678), 7. November 1988 (1988-11-07) & JP 63 155676 A (AGENCY OF IND SCIENCE & TECHNOL), 28. Juni 1988 (1988-06-28)
- DATABASE WPI Section EI, Week 9206, 2. November 1988 (1988-11-02) Derwent Publications Ltd., London, GB; Class S02,Page f04b1, AN 1992-047331 XP002236112 "Pressure gauge" & SU 1 649 319 A (BELOZUBOV EVGENIJ M ET AL), 15. Mai 1991 (1991-05-15)

## Beschreibung

Die Erfindung betrifft einen Druckaufnehmer zur Zylinderdruckmessung bei Motoren, sowie ein Verfahren zur Herstellung desselben.

Ein Sensor zur Erfassung von Vorgängen im Brennraum einer Brennkraftmaschine ist beispielsweise aus der DE 3616 308 A1 bekannt. Bei einem derartigen Sensor soll der Druck im Brennraum mit Hilfe von Druckelementen bestimmt werden. Dabei wird auch auf die Problematik hingewiesen, dass die hohen auftretenden Temperaturen und Druckwerte sich gegenseitig negativ beeinflussen können. Um zumindest eine hohe Temperaturbeständigkeit des druckempfindlichen Elementes zu erreichen, wird in dieser Druckschrift der Aufbau aus α-kristallinem Aluminiumoxid (Saphir) beschrieben, um für die Motorsteuerung wichtige Brennraumgrössen gleichzeitig erfassen zu können. Dabei ist das druckempfindliche Element weitgehend vom Gehäuse entkoppelt, so dass kaum mechanische Spannungen bzw. Verformungen des Gehäuses auf die Druckmembran übertragen werden sollen. Nachteilig ist hierbei jedoch der relativ teure Werkstoff sowie das aufwendige Herstellungsverfahren für die dehnungsempfindlichen Widerstände mit der sog. Silicon-on-Saphire-(SOS)-Technologie. So wird in dieser Druckschrift die Herstellung der Dehnmesswiderstände beschrieben, wobei insbesondere mehrere Ätzschritte erforderlich sind, bevor die Dehnmesswiderstände zu einer Brückenschaltung miteinander verschaltet werden.

Des weiteren ist aus der DE 35 22 427 A1 ein kostengünstigerer Werkstoff für-Sensoranwendungen beschrieben, wobei sich die elektrischen Eigenschaften von Titanoxinitridschichten durch Beimengungen von Stickstoff und Sauerstoff gezielt verändern lassen, insbesondere Temperaturkoeffizienten und Dehnungsfaktoren. Dadurch eignet sich dieses Material speziell für Dehnmessstreifen von Sensoren für die Druck- und Kraftmessung, wobei auch eine hohe Temperaturbeständigkeit gegeben ist. Eine spezielle Anpassung als Druckaufnehmer bzw. Sensor zur Zylinderdruckmessung bei Motoren wird jedoch nicht beschrieben. Für diesen Anwendungsfall ist hierbei insbesondere zu beachten, dass aufgrund der Lastwechselvorgänge und Brennraumbedingung eine erhebliche thermische Deformation der Membran und unterschiedliche Temperaturen an den jeweiligen Dehnmessstreifen auftreten können.

Aus DE-A-35 32 333 ist bekannt, dass sich die Temperaturabhängigkeit des Nullpunkts des Messfühlers minimieren lässt, indem man alle vier Widerstände einer Wheatstoneschen Brückenschaltung auf den gleichen Radius eines runden Membrankörpers anordnet. Nachteil hierbei ist, dass das Signal des Messfühlers klein ist, da nur die radial angeordneten DMS zum Signalhub beitragen. Einflüsse von schnell veränderlichen Temperaturänderungen werden nicht diskutiert.

Auch bei der US-A.4,173,900 werden die Positionen der Halbleiter-DMS auf einer krelsförmigen Membran variiert. Ziel hierbei ist jedoch eine Minimierung der Nichtlinearität des Messfühlers. Temperatureffekte auf den Nullpunkt, insbesondere Effekte von schnell veränderlichen Termperaturen werden nicht diskutiert.

In der DE-A-19833712 wird ein Drucksensor beschrieben, der aus einem Einkristallhalbleiterchip besteht, der auf eine Stahlmembran aufgebracht wird. Diskutiert werden dann Effekte, die durch die verschiedenen Wärmeausdehnungskoeffizienten des Einkristall-Halbleiterchip gegenüber den Stahlkörper verursacht werden. Effekte dieser Art spielen bei der direkten Applikation von Dünnschicht-DMS auf Stahl keine Rolle.

In der Zeitschrift "messen + prüfen/automatik", Dezember 1983 wird ein Überblick über die Möglichkeiten der Temperaturkompensation der Empfindlichkeit gegeben. Dieser geht aber von homogenen Temperaturverteilungen bei der jeweiligen Temperatur aus. Effekte durch Temperaturgradien bei schnell veränderlichen Temperaturen werden nicht erwähnt.

Aus der Druckschrift GB 2 129 569 ist ein Druck- und Temperaturtransducer bekannt, bei dem die Dehnmessstreifen wie üblich im Maximum der Dehnung (Mitte der Membran) und an der Stauchung (äußere Kante der Membran) angeordnet sind. Schnelle Temperaturänderungen, die zum Temperaturgradienten innerhalb der Membran führen, werden nicht beachtet.

Aus der Druckschrift JP 6004032 mit der Veröffentlichungsnummer JP 61163667 ist eine Lösung bekannt, bei der der Temperaturkoeffizient des K-Faktors für die Biegeverkürzung der verwendeten Dehnmessstreifen so eingestellt wird, dass dieser die Temperaturabhängigkeit des E-Moduls (Elastizitätsmodul) des Substrats (TKE) kompensiert. Dies funktioniert nur bei einer bei der jeweiligen Temperatur homogenen Temperaturverteilung über das Substrat.

Demzufolge liegt der Erfindung die Aufgabe zugrunde, einen Druckaufnehmer zu schaffen, mit dem mögliche Messfehler bei Anwendungen, insbesondere bei der Zylinderdruckmessung von Verbrennungsmotoren, bei denen das zu messende Druckmedium, extrem großen und sehr schnellen Temperaturänderungen ausgesetzt ist, weitergehend ausgeschlossen werden können beziehungsweise eine gegenseitige Kompensation erreicht wird. Extrem große, sehr schnelle Temperaturänderungen bedeuten bei Verbrennungsmotoren Temperaturänderungen von über 1000°C in wenigen Millisekunden. Weiterhin soll ein entsprechendes Verfahren zur Herstellung derartiger Druckaufnehmer beschrieben werden.

Diese Aufgabe wird gelöst durch einen Druckaufnehmer mit den Merkmalen des Anspruches 1 sowie ein Verfahren mit den Merkmalen des Anspruches 6.

Die Erfindung schlägt demnach einen Druckaufnehmer zur Zylinderdruckmessung bei Motoren vor, umfassend ein im Querschnitt hutförmiges Trägersubstrat, das aus einem Trägerring und einer darauf einstückig ausgebildeten Membran besteht, auf der erste Dehnmessstreifen und zweite Dehnmessstreifen in Dünnschichttechnik als Brückenschaltung mit zwei Brückenzweigen aufgebracht sind, wobei die ersten Dehnmessstreifen vom Übergang zwischen Trägerring und Membran radial nach innen zum Zentrum der Membran hin eingerückt, vom Ort maximaler Stauchung entfernt angeordnet sind und bei Brückenzweige bei zyklischen Schwankungen durch eine geeignete Wahl des Temperaturkoeffizienten der Widerstände der Dehnmessstreifen auf definierte Werte von -10 bis -100 ppm/K weitgehend betragsgleich beaufschlagt sind, so dass die Fehlerkurve der thermischen Deformation der Membran vom Betrag her im Wesentlichen der Fehlerkurve der Temperaturdifferenz an den Dehnmessstreifen entspricht.

Das erfindungsgemäße Verfahren zur Herstellung eines Druckaufnehmers, wie vorher beschrieben, zeichnet sich dadurch aus, dass der Temperaturkoeffizient der Widerstände der Dehnmessstreifen beim Beschichtungsvorgang zur gegenseitigen Kompensation auf einen Wert von -10 bis -100 ppm pro K eingestellt wird, so dass die Fehlerkurve der thermischen Deformation der Membran vom Betrag her im Wesentlichen der Fehlerkurve der Temperaturdifferenz an den Dehnmessstreifen entspricht.

Durch die gezielte Einrückung der Dehnmessstreifen zum Zentrum der Membran des Druckaufnehmers hin werden die schnellen, zyklisch auftretenden Anteile der temperaturinduzierten Dehnungen beziehungsweise Spannungen minimiert, obwohl üblicherweise die Dehnmessstreifen am Ort der größen mechanischen Dehnung beziehungsweise Stauchungen, d.h. am Übergang beziehungsweise Querschnittsprung zwischen Trägerring und Membran angeordnet werden, da dort das Sensorsignal am ausgeprägtesten ist. Durch diese gezielte Abkehr von der üblichen Bauweise wird die Empfindlichkeit des Sensors gegen die sehr großen und schnellen Temperaturänderungen des Mediums (Thermoschockempflndlichkeit) minimiert, hingegen nicht der Messfehler bei statisch bestehenden Temperaturgradienten im Aufbau, der Thema einiger oben erwähnten Schriften ist. Durch diese Anordnung wird der Dehnmessstreifen, insbesondere in Vollbrückenschaltung auf einem Trägersubstrat aus Stahl mit um etwa 20 % vom Ort maximaler Stauchungen, d.h. etwa dem Querschnittssprung nach innen gerückten Dehnmessstreifen, eine Übereinstimmung der schnellen, bei Verbrennungsmotoren zyklisch auftretenden, temperaturindizierten mechanischen Spannungen zwischen den verschiedenen Positionen der Brückenwiderstände erreicht, wodurch der thermoschockinduzierte Fehler minimiert wird.

Nachfolgend wird der Aufbau eines Druckaufnehmers anhand der Zeichnungen näher erläutert und beschrieben. Hierbei zeigen:
- Fig. 1: einen schematischen Querschnitt durch ein hutförmiges Trägersubstrat des Druckaufnehmers;
- Fig. 2: eine Draufsicht auf die Membran des Druckaufnehmers; und
- Fig. 3: einen exemplarischen Verlauf der Einzel-Fehlerkurven, die sich gegenseitig weitgehend kompensieren.

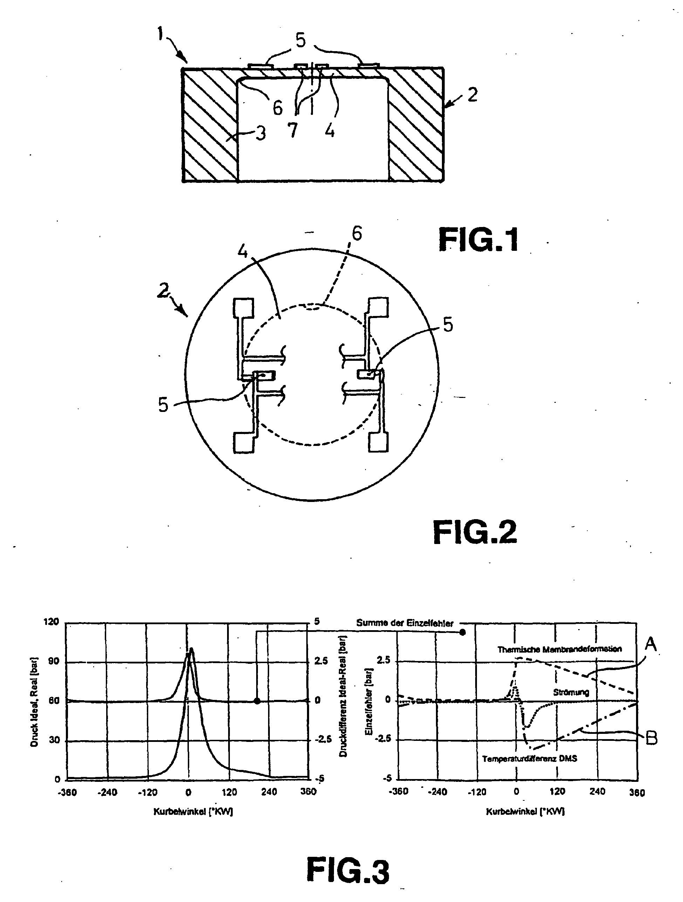

In Fig. 1 ist ein Druckaufnehmer 1 dargestellt, wie dieser vorzugsweise in einem zündkerzenartigen Gehäuse zur Zylinderdruckmessung bei Motoren während des Betriebes angeordnet ist. Der Druckaufnehmer 1 weist ein im Querschnitt topf- bzw. hutförmiges Trägersubstrat 2 auf, das im wesentlichen aus einem relativ starren Trägerring 3 und einer Membran 4 besteht, die demgegenüber eine geringe Dicke aufweist. Auf der Membran 4 sind Dehnmessstreifen 5 und 7 in Dünnschichttechnik aufgebracht, wobei gegenüber der sonst üblichen Bauweise die Dehnmessstreifen 5 nicht am Geometriesprung (Übergang 6) zwischen dem Trägerring 3 und der Membran 4 angeordnet sind, sondern nach innen zum Zentrum der Membran 4 hin eingerückt sind, vorzugsweise um etwa 20 % des Durchmessers am Übergang 6 zwischen Trägerring 3 und der Membran 4. Dieser Übergang 6 ist in der Draufsicht gemäss Fig. 2 als Strichlinie dargestellt, wobei auch die DMS-Brückenschaltung teilweise gezeigt ist.

In Fig. 3 sind die Messergebnisse eines derartigen Druckaufnehmers 1 bei der Zylinderdruckmessung über den Kurbelwinkel dargestellt, wobei die Membran 4 einen Durchmesser von etwa 5 mm und eine Dicke von 0,5 mm aufweist. Im Bereich des oberen Totpunktes (Kurbelwinkel 0°) ergibt sich ein starker Druckanstieg, wie aus der unteren Kurve ersichtlich ist. Die obere Kurve stellt hierbei die Differenz der realen Messwerte in bar zu den idealen Druckwerten dar.

In der rechten Hälfte von Fig. 3 sind die Kurven der Einzelfehler aufgetragen, die sich im wesentlichen aus den Strömungsvorgängen, der thermischen Membrandeformation und der Temperaturdifferenz an den jeweiligen Dehnmessstreifen 5 ergeben. Der Fehlereinfluss durch die Strömungsvorgänge, insbesondere die Füll- und Entleervorgänge der Messkammer an der Membran 4, lässt sich relativ gut beherrschen, insbesondere wenn als Thermoschutzgitter eine Hülse oder ein Sieb über dem Druckaufnehmer verwendet wird, wie dies an sich bekannt ist (vgl. beispielsweise die Ausführungen in der eingangs genannten DE 36 16 308 A1). Von wesentlicherem Einfluss sind hierbei die nach oben aufgetragene thermische Membrandeformation und die nach unten aufgetragene Temperaturdifferenz an den jeweiligen Positionen der DMS. Die erstgenannte Fehlerkurve A ergibt sich insbesondere durch Einströmen der heißen Verbrennungsgase auf die Membran, wodurch sich erhebliche Temperaturgradienten über die Dicke der Membran ergeben.

Diese temperaturbedingte Ausdehnung führt zu einer Deformation der Membran 4 und damit zu entsprechenden Messfehlern, die sich in zwei Anteile aufspalten lassen: Der erste, statische Anteil, hervorgerufen durch den mittleren Wärmestrom von der Membran zu den kühleren Trägerring, führt zu einer Verschiebung des Brückennullpunkts und damit zu einem Messfehler gegenüber den Kalibrierdaten des Sensors. Da jedoch der Nullpunkt des Drucksignals bei der Zylinderdruckmessung über eine thermodynamische Einpassung in der späteren Verarbeitung ohnehin berechnet wird, wirkt sich dieser Fehler bei der Zylinderduckmessung nicht aus und ist daher in der Grafik von Fig.3 nicht dargestellt. Die zweite schnelle und zyklisch mit den Zündungen des Motors auftretende Membrandeformation führt zu einem relevanten Messfehler, wie in Fig.3 dargestellt. Dieser zyklisch auftretende Messfehler, hervorgerufen durch die thermische Membrandeformation sowie eine weitgehende Kompensation des Restfehlers (zyklische Temperaturdrift) soll hierbei gezielt minimiert bzw. kompensiert werden. Das Maximum dieses Einzelfehlers liegt hierbei nach der Zündung kurz nach 0°KW.

Ebenfalls durch die thermische Belastung der Membran 4 ergeben sich auch Temperaturunterschiede an den jeweiligen Positionen der Dehnmessstreifen 5 (Kurve B). Aufgrund des jeweiligen Temperaturkoeffizienten der Dehnmessstreifen 5 führt dies zu einer weiteren Abweichung des gemessenen Druckes vom tatsächlichen Druck. Dieser Messfehler tritt im Motorzyklus annähernd phasengleich zu dem vorstehend genannten Einzelfehler (Kurve A) durch die thermische Membrandeformation (zyklische Temperaturdrift) auf. Da diese beiden (nach oben aufgetragen: (A); nach unten aufgetragen: (B)) Fehlerkurven annähernd phasengleich auftreten, besteht nunmehr die Möglichkeit, durch eine geeignete Wahl des Temperaturkoeffizienten der Widerstände der Dehnmessstreifen 5 im Absolutwert weitgehend zu kompensieren.

Da dieser Einzelfehler (Kurve B) der Temperaturdifferenz der Dehnmessstreifen 5 maßgeblich durch den Temperaturkoeffizienten der Dehnmessstreifen 5 bestimmt wird, kann durch Einstellung des Temperaturkoeffizienten auf definierte Werte von bevorzugt etwa zwischen - 10 und -100, insbesondere etwa -60 ppm/K der Betrag bzw. Absolutwert so eingestellt werden, dass der Summenfehler nahezu Null wird.

Die Einstellung des Temperaturkoeffizienten auf etwa diesen Wert kann hierbei durch die in der eingangs genannten DE 35 22 427 A1 grundsätzlich beschriebenen Verfahren bei der Herstellung des Druckaufnehmers 1 erzielt werden. Hierbei ist darauf hinzuweisen, dass gemäss dieser Druckschrift der Temperaturkoeffizient üblicherweise auf 0 ppm/K eingestellt wird. Durch gezieltes Abgehen von dem üblicherweise eingestellten 0-Wert wird nunmehr ein gezielter "Einzelfehler" in Kauf genommen, um den unvermeidlichen Einzelfehler der thermischen Membrandeformation gezielt und definiert vom Betrag her auszugleichen, so dass sich ein Summenfehler von nahezu Null ergibt.

## Patentansprüche

1. Druckaufnehmer zur Zylinderdruckmessung bei Motoren, umfassend ein im Querschnitt hutförmiges Trägersubstrat (2), das aus einem Trägerring (3) und einer darauf einstückig ausgebildeten Membran (4) besteht, auf der erste Dehnmessstreifen (5) und zweite Dehnmessstreifen (7) in Dünnschichttechnik als Brückenschaltung mit zwei Brückenzweigen aufgebracht sind, wobei die ersten Dehnmessstreifen (5) vom Übergang (6) zwischen Trägerring (3) und Membran (4) radial nach innen zum Zentrum der Membran (4) hin eingerückt vom Ort maximaler Stauchung entfernt angeordnet sind und beide Brückenzweig (5, 7) bei zyklischen Schwankungen durch eine geeignete Wahl des Temperaturkoeffizienten der Widerstände der Dehnmessstreifen (5) auf definierte Werte von -10 bis -100 ppm/K weitgehendst betragsgleich (A-B) beaufschlagt sind, so dass die Fehlerkurve (A) der thermischen Deformation der Membran (4) vom Betrag her im wesentlichen der Fehlerkurve (B) der Temperaturdifferenz an den Dehnmeßstreifen (5) entspricht.

2. Druckaufnehmer nach Anspruch 1, **dadurch gekennzeichnet, dass** die Dehnmesstreifen (5) in Vollbrückenschaltung angeordnet sind.

3. Druckaufnehmer nach Anspruch 1 oder 2, **dadurch gekennzeichnet, dass** das Trägersubstrat (2) aus Stahl besteht.

4. Druckaufnehmer nach einem der Ansprüche 1 bis 3, **dadurch gekennzeichnet, dass** die Dehnmessstreifen (5) um etwa 20% bezüglich des Durchmessers am Übergang (6) zwischen dem Trägerring (3) und der Membran (4) zum Zentrum der Membran (4) hin eingerückt sind.

5. Druckaufnehmer nach einem der vorhergehenden Ansprüche, **dadurch gekennzeichnet, dass** der Widerstand der Dehnmessstreifen (5) auf einen Wert von -60 ppm/K eingestellt ist.

6. Verfahren zur Herstellung eines Druckaufnehmers nach einem der Ansprüche 1 bis 5, **dadurch gekennzeichnet, dass** der Temperaturkoeffizient der Widerstände der Dehnmeßstreifen beim Beschichtungsvorgang zur gegenseitigen Kompensation auf einen Wert von -10 bis -100 ppm/K eingestellt wird, so dass die Fehlerkurve (A) der thermischen Deformation der Membran (4) vom Betrag her im Wesentlichen der Fehlerkurve (B) der Temperaturdifferenz an den Dehnmessstreifen (5) entspricht.

7. Verfahren nach Anspruch 6, **dadurch gekennzeichnet, dass** der Temperaturkoeffizient der Widerstände der Dehnmeßstreifen TC etwa zwischen -10 und -100, vorzugsweise -60 ppm/K beträgt.

## Claims

1. Pressure absorber for measuring the cylinder pressure in motors, comprising a carrier substrate (2) hat-shaped in cross section which consists of a carrier ring (3) and a membrane (4) built on it in one piece on which the first resistance strain gauge (5) and the second resistance strain gauge (7) are applied in thin-film technique as bridge circuit with two bridge arms, wherein the first resistance strain gauges (5) are arranged from the transition (6) between the carrier ring (3) and the membrane (4) radial to the inside indented to the center of the membrane (4) spaced apart from the point of maximal upsetting, and both bridge arms (5, 7) during cyclic variations are impinged by a suitable choice of the temperature coefficient of the resistors of the resistance strain gauges (5) to defined values of -10 to -100 ppm/K as equal-amounted as possible, so that the error curve (A) of the thermal deformation of the membrane (4) corresponds with regard to the amount essentially to the error curve (B) of the temperature difference at the resistance strain gauges (5).

2. Pressure absorber according to claim 1, **characterised in that** the resistance strain gauges (5) are arranged in full bridge circuit.

3. Pressure absorber according to claim 1 or 2, **characterised in that** the carrier substrate (2) consists of steel.

4. Pressure absorber according to one of the claims 1 to 3, **characterised in that** the resistance strain gauges (5) are indented by about 20% with reference to the diameter at the transition (6) between the carrier ring (3) and the membrane (4) to the center of the membrane (4).

5. Pressure absorber according to one of the preceding claims, **characterised in that** the resistor of the resistance strain gauge is set to a value of -60 ppm/K.

6. Method for producing a pressure absorber according to one of the claims 1 to 5, **characterised in that** the temperature coefficient of the resistors of the resistance strain gauges is set during the coating process for mutual compensation to a value of -10 to -100 ppm/K, so that the error curve (A) of the thermal deformation of the membrane (4) corresponds with regard to the amount essentially to the error curve (B) of the temperature difference at the resistance strain gauges (5).

7. Method according to claim 6, **characterised in that** the temperature coefficient of the resistors of the resistance strain gauges TC is roughly between -10 and -100, preferably -60 ppm/K.

## Revendications

1. Capteur de pression destiné à la détermination de la pression dans les cylindres de moteurs, comportant un substrat de support (2), dont la section ressemble à celle d'un chapeau formé d'une seule pièce constituée d'un anneau de support (3) et d'une membrane (4) située au-dessus de celui-ci, puis un premier extensomètre à bandes (5) et un deuxième extensomètre à bandes (7) déposés par un procédé de dépôt par couche mince au-dessus dudit substrat et formant un pont de mesure à deux branches dont les premières bandes de mesure (5) sont situées à l'intérieur du diamètre de transition (6) entre l'anneau de support (3) et la membrane (4) et ainsi éloignées de la ligne de compression maximale, les coefficients de température des résistances des bandes de mesure (5) des deux branches (5, 7) sont choisis de façon appropriée à des valeurs approximativement identiques (A-B) et allant de -10 à -100 ppm/K afin de produire lors de variations cycliques une courbe d'erreur (A) produite par la déformation thermique de la membrane (4) d'une valeur absolue correspondant à celle de la courbe d'erreur (B) produite par la différence de température entre les bandes de mesure (5) de l'extensomètre.

2. Capteur de pression selon la revendication 1, **caractérisé en ce que** les bandes de mesure (5) de l'extensomètre forment un pont de mesure complet.

3. Capteur de pression selon la revendication 1 ou 2, **caractérisé en ce que** le substrat de support (2) est en acier.

4. Capteur de pression selon une des revendications 1 à 3, **caractérisé en ce que** les bandes de mesure (5) de l'extensomètre sont décalées vers le centre de la membrane (4) d'environ 20% par rapport au diamètre de la transition (6) entre l'anneau de support (3) et la membrane (4).

5. Capteur de pression selon une des revendications précédentes, **caractérisé en ce que** la résistance des bandes de mesure (5) de l'extensomètre est ajustée à une valeur de -60 ppm/K.

6. Procédé de fabrication d'un capteur de pression selon une des revendications 1 à 5, **caractérisé en ce que** les coefficients de température des bandes de mesure de l'extensomètre sont ajustés lors du dépôt à des valeurs allant de -10 à -100 ppm/K pour une compensation mutuelle afin d'obtenir une courbe d'erreur (A) produite par une déformation thermique de la membrane (4) dont la valeur absolue est approximativement égale à celle de la courbe d'erreur (B) produite par la différence de température entre les bandes de mesure (5) de l'extensomètre.

7. Procédé selon la revendication 6, **caractérisé en ce que** le coefficient de température TC des résistances des bandes de mesure de l'extensomètre est situé approximativement entre -10 et -100 ppm/K et de préférence à -60 ppm/K.
